# EUROPÄISCHE PATENTSCHRIFT

(11) **EP 1 880 931 B1**
(45) Veröffentlichungstag und Bekanntmachung des Hinweises auf die Patenterteilung: **26.05.2010**
(21) Anmeldenummer: 07012236.1
(22) Anmeldetag: 22.06.2007
(51) Int. Cl.: B62D 35/00, B60Q 1/30

(54) **Kraftfahrzeug mit im Heckbereich angeordneter Beleuchtungseinrichtung und aktivierbarer Windleiteinrichtung**
Motor vehicle with rear lighting device and deployable spoiler
Dispositif d'illumination à l'arrière d'un véhicule automobile et déflecteur aérodynamique rétractable

(30) Priorität: 19.07.2006 DE 102006033375
(43) Veröffentlichungstag der Anmeldung: 23.01.2008
(73) Patentinhaber: Dr. Ing. h.c. F. Porsche AG, 70435 Stuttgart (DE)
(72) Erfinder: Schreiber, Reinhold, 75233 Tiefenbronn (DE)

(56) Entgegenhaltungen:
- WO-A-2007/124912
- DE-C1- 19 652 692
- US-A- 4 838 603
- US-A1- 2004 184 283
- US-B1- 6 663 272

## Beschreibung

Die vorliegende Erfindung betrifft ein Kraftfahrzeug mit zumindest einer im Heckbereich angeordneten Beleuchtungseinrichtung und zumindest einer ebenfalls im Heckbereich angeordneten und aktivierbaren Windleiteinrichtung gemäß dem Oberbegriff des Anspruchs 1.

Ein derartiges Kraftfahrzeug ist beispielsweise aus der DE 101 36 823 A1 bekannt, wobei die Windleiteinrichtung aus zwei voneinander beabstandeten Spoilerelementen besteht, die an beiden seitlichen Enden des Fahrzeugs angeordnet sind. Über eine Steuereinrichtung können dabei die Spoiler aus einer Ruheposition in eine Maximalposition und zurück verfahren werden, weil für beide Spoilerelemente jeweils eine Steuereinrichtung vorgesehen ist, die an eine Regelungseinrichtung angeschlossen ist und die in Abhängigkeit von vorgegebenen und/oder ermittelten und/oder gemessenen Parametern die Spoilerelemente entweder getrennt voneinander oder zusammen verstellen. Dadurch soll auch bei Kraftfahrzeugen mit einem Stufenheck eine aktiv einsetzbare Windleitinrichtung geschaffen werden.

Weitere Windleiteinrichtungen im Heckbereich eines Kraftfahrzeuges sind beispielsweise aus der EP 0 204 005 B1, aus der DE 1 009 509 und aus der US 4,838,603 bekannt.

Allen aus dem Stand der Technik bekannten Windleiteinrichtungen ist dabei gemein, dass sie entweder starr, d.h. nicht aktivierbar oder verstellbar ausgebildet sind oder aber für den Fall, dass sie aktivierbar ausgebildet sind, eine eigenständige Anordnung am Kraftfahrzeug bilden, welche insbesondere auch eine eigenständige, d.h. separate Versorgung mit Elektrizität benötigen.

Die US-A-4,838,603 und die WO 2007/124912 A offenbaren jeweils ein Kraftfahrzeug mit zumindest einer im Heckbereich angeordneten Beleuchtungseinrichtung und zumindest einer ebenfalls im Heckbereich angeordneten Windleiteinrichtung, wobei die zumindest eine Windleiteinrichtung Bestandteil der heckseitigen Beleuchtungseinrichtung ist.

Die vorliegende Erfindung beschäftigt sich mit dem Problem, für ein Kraftfahrzeug der gattungsgemäßen Art eine verbesserte oder zumindest eine andere Ausführungsform anzugeben, welche sich insbesondere durch einen verminderten konstruktiven Aufwand auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, bei einem Kraftfahrzeug mit zumindest einer heckseitig angeordneten Beleuchtungseinrichtung, beispielsweise einem Rücklicht, und zumindest einer ebenfalls heckseitig angeordneten und aktivierbaren Windleiteinrichtung, die Windleiteinrichtungen als Bestandteil der heckseitigen Beleuchtungseinrichtung auszubilden und dadurch die Windleiteinrichtung und die heckseitige Beleuchtungseinrichtung als zusammengehörige Baugruppe auszuführen. Dies bietet den großen Vorteil, dass sowohl für die Windleiteinrichtung als auch für die heckseitige Beleuchtungseinrichtung eine ohne hin für die Beleuchtungseinrichtung vorhandene Elektrizitätsversorgung bzw. eine ohne hin vorhandener Anschluss an ein CAN-Bus-System, auch für den Anschluss der Windleiteinrichtung gewerden kann und dadurch eine separate Leitungsführung zur Windleiteinrichtung, verbunden mit dem dazu gehörigen Verlegeaufwand und den dazu gehörigen Materialkosten, vermieden werden kann. Insbesondere kann auch eine elektrische Steckverbindung an der Beleuchtungseinrichtung so ausgebildet sein, dass diese sowohl die elektrische Versorgung der Windleiteinrichtung als auch der Beleuchtungseinrichtung gewährleistet, wodurch der Montageaufwand deutlich reduziert werden kann, da ein separates Verbinden der Windleiteinrichtung mit dem elektrischen Bordnetz des Kraftfahrzeugs entfallen kann. Bei einem in modernen Fahrzeugen oftmals vorhandenen Bus-System, kann auch dieses zur Steuerung der Windleiteinrichtung mit genutzt werden, wodurch dessen Auslastungsgrad verbessert wird.

Zweckmäßig ist eine Steuereinrichtung vorgesehen, welche die Windleiteinrichtung in Abhängigkeit von fahrdynamischen Parametern aktiviert und/oder steuert. Dabei kann die Steuereinrichtung beispielsweise so ausgebildet sein, dass sie die Windleiteinrichtung erst ab einer vorgegebenen Mindestgeschwindigkeit des Kraftfahrzeugs ausfährt, da auch erst ab einer derartigen Mindestgeschwindigkeit die Windleiteinrichtung ihre Funktion, beispielsweise eine Abtriebskraft zu erzeugen, welche die Straßenhaftung verbessert, erfüllen kann. Die fahrdynamischen Parameter können selbstverständlich auch eine Beschleunigung und/oder eine Verzögerung und/oder eine Windgeschwindigkeit umfassen.

Bei einer weiteren vorteilhaften Ausführungsform der erfindungsgemäßen Lösung steuert und/oder aktiviert die Steuereinrichtung die Windleiteinrichtung in Abhängigkeit einer Beleuchtungsfunktion. Hierzu kann als Beispiel ein Bremslicht angeführt werden, welches beim Betätigen eines Bremspedals aufleuchtet. Insbesondere bei einem derartigen Verzögerungsvorgang ist eine ausreichende Bodenhaftung des Kraftfahrzeugs zur Übertragung von Bremskräften auf die Straßen von großer Bedeutung, so das denkbar ist, dass beim Betätigen des Bremspepales nicht nur das Bremslicht der Beleuchtungseinrichtung aufleuchtet, sonder gleichzeitig die Windleiteinrichtung aktiviert wird und dadurch eine Abtriebskraft erzeugt, welche die Bodenhaftung des Kraftfahrzeugs verbessert. Selbstverständlich ist auch denkbar, dass bei einem Bremsvorgang aus einer geringen Geschwindigkeit die Windleiteinrichtung nicht aktiviert wird, während bei einem Bremsvorgang aus einer hohen Geschwindigkeit ein rasches Verstellen der Windleiteinrichtung in ihre Gebrauchsstellung nach dem Betätigen des Bremspedales erfolgt.

Bei der Erfindung ist die Windleiteinrichtung in ein Gehäuse der Beleuchtungseinrichtung integriert. Somit kann eine einfach handzuhabende, einheitliche Baugruppe, bestehend aus der Windleiteinrichtung und aus der Beleuchtungseinrichtung, geschaffen werden, welche insbesondere einen Montageaufwand bei der Fertigung des Kraftfahrzeugs reduziert, da nunmehr die Windleiteinrichtung zusammen mit der Beleuchtungseinrichtung in einer einheitlichen Baugruppe zusammengefasst ist und somit zusammen und nicht wie bisher separat, eingebaut werden kann.

Zweckmäßig ist die Windleiteinrichtung zwischen wenigstens einer Gebrauchsstellung, in welcher ein Windleitelement ausgefahren oder ausgeschwenkt ist, und einer Nichtgebrauchsstellung, in welcher das Windleitelement in die Beleuchtungseinrichtung eingefahren oder eingeschwenkt ist, verstellbar. Dabei können unterschiedliche Gebrauchsstellungen definiert sein, welche jeweils ein unterschiedlich weites Ausfahren des Windleitelements aufweisen und dadurch je nach Ausschwenk- bzw. Ausfahrgrad des Windleitelements unterschiedliche Windleiteigenschaften erzeugen. In ihrer Nichtgebrauchsstellung ist das Windleitelement vorzugsweise soweit in die Beleuchtungseinrichtung bzw. in eine Gehäuse der Beleuchtungseinrichtung eingefahren oder eingeschwenkt, dass es nicht über eine Außenkontur des Kraftfahrzeugs hinausragt und bestenfalls von außen überhaupt nicht als Windleiteinrichtung wahrgenommen wird. Hierzu kann das erfindungsgemäße Windleitelement an seinem, in Ausfahrrichtung vorderen Ende beispielsweise eine Zierleiste tragen, welche bei vollständig eingefahrenem Windleitelement mit einer beispielsweise die Beleuchtungseinrichtung umrandenden Zierleiste fluchtet, so dass bei einer sich in ihrer Nichtgebrauchstellung befindlichen Windleiteinrichtung der äußere optische Eindruck des Kraftfahrzeugs in seiner ursprünglichen Form erhalten bleibt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Beleuchtungseinrichtung mit einer translatorisch verstellbaren Windleiteinrichtung,
- Fig. 2: eine Darstellung wie in Fig. 1, jedoch mit modifizierter Beleuchtungseinrichtung und modifizierter Windleiteinrichtung,
- Fig. 3: eine Darstellung wie in Fig. 1, jedoch mit einer Windleiteinrichtung, welche auf einer Kreisbahn translatorisch verstellbar ist,
- Fig. 4: eine Beleuchtungseinrichtung mit einer ausschwenkbaren Windleiteinrichtung.

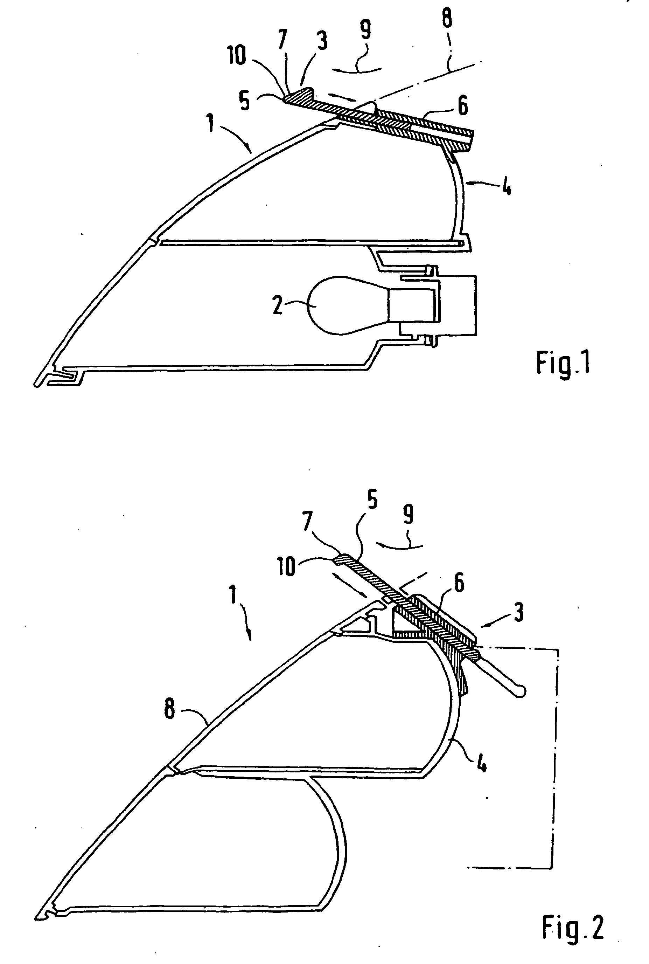

Entsprechend Fig. 1 weist eine Beleuchtungseinrichtung 1 zumindest ein Beleuchtungsmittel 2, beispielsweise eine Glühbirne oder ein LED, auf sowie eine oberhalb bzw. in einem oberen Randbereich der Beleuchtungseinrichtung 1 angeordnete Windleiteinrichtung 3. Die Beleuchtungseinrichtung 1 ist dabei in einem Heckbereich eines ansonsten nicht dargestellten Kraftfahrzeugs angeordnet und beispielsweise als Rückleuchte ausgebildet. Erfindungsgemäß bildet die zumindest eine Windleiteinrichtung 3 eine Bestandteil der heckseitigen Beleuchtungseinrichtung 1 und/oder ist in ein Gehäuse 4 der Beleuchtungseinrichtung 1 integriert. Somit bilden die Beleuchtungseinrichtung 1 und die Windleiteinrichtung 3 eine zusammengehörige Baugruppe, welche bei der Montage in einem einzigen Arbeitsschritt am Kraftfahrzeug montierbar ist. Dies bietet den großen Vorteil, dass für die erfindungsgemäße Windleiteinrichtung 3 ein nicht dargestellter, aber für die Beleuchtungseinrichtung 1 ohnehin vorhandener Anschluss an ein elektrisches Bordnetz des Kraftfahrzeugs mitgenutzt werden kann, so dass eine separate elektrische Zuleitung für die Windleiteinrichtung 3 entfallen kann. Gleichzeitig ist auch denkbar, dass sowohl die Windleiteinrichtung 3 als auch die Beleuchtungseinrichtung 1 über eine gemeinsame, nicht gezeigte Steckverbindung an ein Bus-System des Kraftfahrzeugs angeschlossen werden kann, wodurch sich der Montageaufwand ebenfalls reduziert.

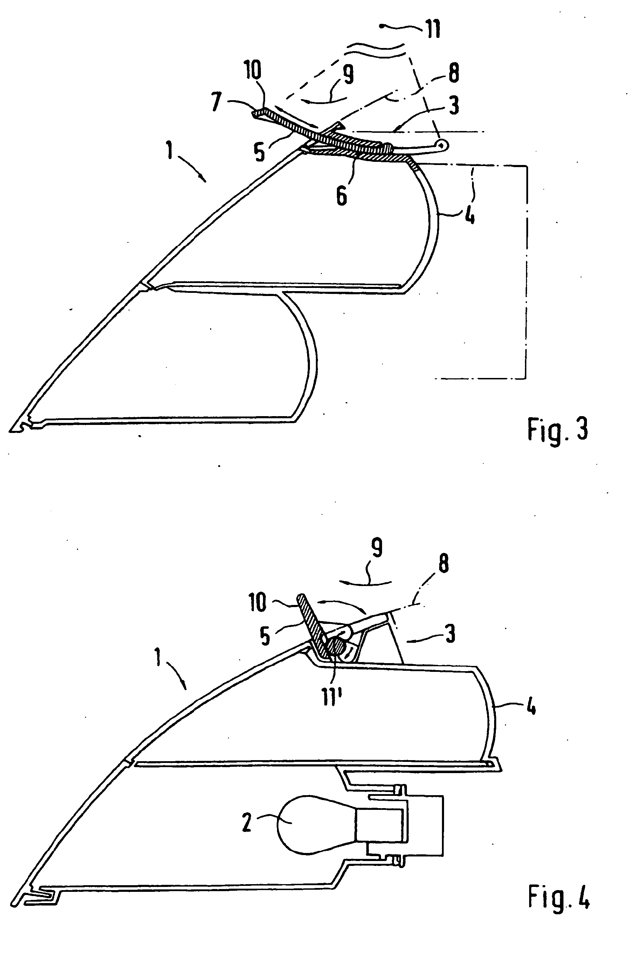

Generell kann die Windleiteinrichtung 3 bzw. ein Windleitelement 5 derselben zwischen wenigstens einer Gebrauchsstellung, in welcher sie ausgefahren (vgl. Fig. 1 bis 3) oder ausgeschwenkt (vgl. Fig. 4) ist, und einer Nichtgebrauchsstellung, in welche sie in die Beleuchtungseinrichtung 1 eingefahren oder eingeschwenkt ist, verstellbar. Gemäß der Fig. 1 wird dabei das Windleitelement 5 der Windleiteinrichtung 3 translatorisch zwischen seiner Gebrauchs- und seiner Nichtgebrauchsstellung verstellt und in einer Führung, welche vorzugsweise ebenfalls Bestandteil des Gehäuses 4 der Beleuchtungseinrichtung 1 ist, geführt. Dabei kann je nach gewünschter Windleiteigenschaft der Windleiteinrichtung 3 das Windleitelement 5 unterschiedlich weit ausgefahren werden, so dass mehrere Gebrauchsstellung eingenommen werden können. An seinem in Ausfahrrichtung vorderen Ende kann das Windleitelement 5 vorzugsweise einen Spoilerelement 7 aufweisen, welche eine gewünschte Windleiteigenschaft zusätzlich unterstützt. Dabei kann das Spoilerelement 7 unterschiedlich ausgebildet sein (vgl. Fig. 1 bis 3). In seinem eingefahrenen bzw. eingeschwenkten Zustand, d.h. in seiner Nichtgebrauchsstellung, ist das Windleitelement 5 vorzugsweise gänzlich in die Führung 6 bzw. in die Beleuchtungseinrichtung 1 eingefahren und liegt innerhalb einer Außenkonturlinie 8 des Kraftfahrzeugs.

Darüber hinaus kann am Spoilerelement 7 optional ein Designelement 10 angeordnet sein, welches beispielsweise bei eingefahrener Windleiteinrichtung 3 einen Teil einer zierleistenartigen Umrandung der Beleuchtungseinrichtung 1 bildet, so dass die Windleiteinrichtung 3 in ihrem Nichtgebrauchszustand ein äußeres Erscheinungsbild des Kraftfahrzeugs nicht beeinträchtigt.

Bei ausgefahrenem Windleitelement 5 erzeugt ein Fahrtwind 9 eine Abtriebskraft auf das Windleitelement 5, wodurch der Abtrieb des Kraftfahrzeugs und dadurch dessen Bodenhaftung verbessert werden. Je nach Orientierung (vgl. Fig. 1 und 2) wird dabei die durch den Fahrtwind 9 erzeugte Abtriebskraft unterschiedlich beeinflusst.

Generell kann die Windleiteinrichtung 3 bzw. das zugehörige Windleitelement 5 entweder translatorisch verstellbar sein (vgl. die Fig. 1 und 2) oder um eine virtuelle und beabstandet zur Beleuchtungseinrichtung 1 angeordnete Schwenkachse 11 verschwenkbar gelagert sein (vgl. Fig. 3) oder um eine im wesentlichen in Fahrzeugquerrichtung verlaufende Achse 11' verdrehbar gelagert sein (vgl. Fig. 4).

Eine Ausfahr- bzw. Ausschwenkbewegung wird dabei vorzugsweise von einer nicht gezeigten Steuereinrichtung gesteuert, welche so ausgebildet ist, dass sie die Windleiteinrichtung 3 bzw. deren Ausfahrbewegung in Abhängigkeit von fahrdynamischen Parametern, beispielsweise einer gemessenen Windgeschwindigkeit oder einer gemessenen Fahrgeschwindigkeit aktiviert und/oder steuert. Denkbar ist darüber hinaus, dass die Steuereinrichtung die Windleiteinrichtung 3 in Abhängigkeit einer Beleuchtungsfunktion der Beleuchtungseinrichtung 1 aktiviert und/oder steuert. Hierbei ist insbesondere vorstellbar, dass bei einem, durch einen Druck auf ein Bremspedal eingeleiteten Bremsvorgang aus einer hohen Geschwindigkeit die Windleiteinrichtung 3 in ihre Gebrauchsstellung verstellt wird und dadurch einen erhöhten Abtrieb des Kraftfahrzeugs bewirkt, wodurch die Bremskräfte besser auf die Straße übertragen werden können.

Gemäß der Fig. 2 ist eine Windleiteinrichtung 3 gezeigt, bei welcher ein Anstellwinkel des Windleitelements 5 bezüglich der Horizontalen im Vergleich zu der in Fig. 1 gezeigten Windleiteinrichtung 3 größer ist, wodurch eine hierzu im Vergleich unterschiedliche Abtriebskraft erzeugt wird. Gleichzeitig ist das Spoilerelement 7 anders ausgebildet, insbesondere an ein äußeres Erscheinungsbild des Kraftfahrzeugs angepasst.

In Fig. 3 ist eine Windleiteinrichtung 3 mit einem Windleitelement 5 gezeigt, welches zwischen seiner Gebrauchs- und seiner Nichtgebrauchsstellung um eine virtuelle und beabstandete zur Beleuchtungseinrichtung 1 angeordnete Schwenkachse 11 verschwenkbar ist. Dabei ist die Führung 6 im Unterschied zu den Führungen 6 der Fig. 1 und 2 gekrümmt ausgebildet.

Bei der Windleiteinrichtung 3 gemäß der Fig. 4 wird das Windleitelement 5 zwischen seiner Gebrauchs- und seiner Nichtgebrauchsstellung um die Schwenkachse 11' verdreht, wobei auch bei dieser Ausführungsform, ebenso wie bei den anderen Ausführungsformen gemäß den Fig. 1 bis 3 unterschiedliche Gebrauchsstellung eingenommen werden können.

Allen Ausführungsformen ist dabei gemein, dass das Windleitelement 5 von einer Antriebseinrichtung angetrieben und damit zwischen den Gebrauchsstellungen und der Nichtgebrauchsstellung verstellt werden kann, wobei die Antriebseinrichtung ebenfalls vorzugsweise im Gehäuse 4 der Beleuchtungseinrichtung 1 untergebracht bzw. integriert ist. Als Antriebseinrichtung kommt hierbei insbesondere ein elektrischer Antrieb in Betracht.

Generell ist dabei in den Fig. 1 bis 4 lediglich eine einzige Beleuchtungseinrichtung 1 in einer jeweiligen Schnittdarstellung gezeigt, so dass bei üblicherweise zwei heckseitig eines Kraftfahrzeugs angeordneten Beleuchtungseinrichtungen 1 auch jeweils eine zugeordnete Windleiteinrichtung 3 vorgesehen ist. Dabei können durch die erfindungsgemäße Integration der Windleiteinrichtung 3 in die Beleuchtungseinrichtung 1 insbesondere Vorteile hinsichtlich einer verbesserten Aerodynamik und damit eines reduzierten Kraftstoffverbrauches und Vorteile hinsichtlich einer Verbesserung des Abtriebes durch eine definierte Abrisskante und dadurch eine höhere Fahrstabilität bzw. ein kürzerer Bremsweg erreicht werden. Darüber hinaus wird eine Beeinträchtigung des äußeren Erscheinungsbildes des Kraftfahrzeugs vermieden, da das Windleitelemenet 5 vorzugsweise erst ab einer vordefinierten Mindestgeschwindigkeit, beispielsweise 80 km/h, ausgefahren bzw. ausgeschwenkt wird. Somit sind keine sicherheitsrelevanten Änderungen der Form erforderlich, da die Windleiteinrichtung 3 insbesondere im Stadtverkehr, also bei geringeren Geschwindigkeiten, in ihrem Nichtgebrauchszustand verbleibt.

## Patentansprüche

1. Kraftfahrzeug mit zumindest einer im Heckbereich angeordneten Beleuchtungseinrichtung (1) und zumindest einer ebenfalls im Heckbereich angeordneten und aktivierbaren Windleiteinrichtung (3),
**dadurch gekennzeichnet,**
**dass** die zumindest eine Windleiteinrichtung (3) Bestandteil der heckseitigen Beleuchtungseinrichtung (1) ist, dass die Windleiteinrichtung (3) zwischen wenigstens einer Gebrauchsstellung, in welcher ein Windleitelement (5) ausgefahren oder ausgeschwenkt ist, und einer Nichtgebrauchstellung, in welcher das Windleitelement (5) in die Beleuchtungseinrichtung (1) eingefahren oder eingeschwenkt ist, verstellbar ist und dass die Windleiteinrichtung (3) in ein Gehäuse (4) der Beleuchtungseinrichtung (1) integriert ist.

2. Kraftfahrzeug nach Anspruch 1,
**dadurch gekennzeichnet,**
**dass** die Windleiteinrichtung (3) in einem oberen Randbereich der Beleuchtungseinrichtung (1) angeordnet ist.

3. Kraftfahrzeug nach Anspruch 1,
**dadurch gekennzeichnet,**
**dass** das Windleitelement (5) entweder
- translatorisch verstellbar oder
- um eine im wesentlichen in Fahrzeugquerrichtung verlaufende Achse (11') verdrehbar oder
- um eine virtuelle und beabstandet zur Beleuchtungseinrichtung (1) angeordnete Schwenkachse (11) verschwenkbar
in/an der Beleuchtungseinrichtung (1) gelagert ist.

4. Kraftfahrzeug nach Anspruch 1 oder 3,
**dadurch gekennzeichnet,**
**dass** das Windleitelement (5) in seiner Nichtgebrauchsstellung innerhalb einer Außenkontur (8) des Kraftfahrzeugs verbleibt.

5. Kraftfahrzeug nach einem der vorhergehenden Ansprüche,
**dadurch gekennzeichnet,**
**dass** eine Steuereinrichtung vorgesehen ist, welche so ausgebildet ist, dass sie die Windleiteinrichtung (3) in Abhängigkeit von fahrdynamischen Parametern aktiviert und/oder steuert.

6. Kraftfahrzeug nach Anspruch 5,
**dadurch gekennzeichnet,**
**dass** die Steuereinrichtung so ausgebildet ist, dass sie die Windleiteinrichtung (3) in Abhängigkeit einer Beleuchtungsfunktion aktiviert und/oder steuert.

7. Kraftfahrzeug nach Anspruch 1,
**dadurch gekennzeichnet,**
**dass** ein Antrieb für die Windeleiteinrichtung (3) in das Gehäuse (4) der Beleuchtungseinrichtung (1) integriert ist.

## Claims

1. Motor vehicle with at least one illuminating device (1) arranged in the rear region, and at least one wind-deflecting device (3) which is likewise arranged in the rear region and can be activated, **characterized in that** the at least one wind-deflecting device (3) is part of the rear illuminating device (1), **in that** the wind-deflecting device (3) can be adjusted between at least one operative position, in which a wind-deflecting element (5) is extended or swung out, and an inoperative position, in which the wind-deflecting element (5) is retracted or swung into the illuminating device (1), and **in that** the wind-deflecting device (3) is integrated in a housing (4) of the illuminating device (1).

2. Motor vehicle according to Claim 1, **characterized in that** the wind-deflecting device (3) is arranged in an upper edge region of the illuminating device (1).

3. Motor vehicle according to Claim 1, **characterized in that** the wind-deflecting element (5) is mounted in/on the illuminating device (1) either
- such that it can be adjusted in a translatory manner or
- such that it can be rotated about an axis (11') running essentially in the transverse direction of the vehicle, or
- such that it can be pivoted about a virtual pivot axis (11) arranged at a distance from the illuminating device (1).

4. Motor vehicle according to Claim 1 or 3,
**characterized in that**, in its inoperative position, the wind-deflecting element (5) remains within an outer contour (8) of the motor vehicle.

5. Motor vehicle according to one of the preceding claims, **characterized in that** a control device is provided which is designed in such a manner that it activates and/or controls the wind-deflecting device (3) as a function of parameters relating to vehicle dynamics.

6. Motor vehicle according to Claim 5, **characterized in that** the control device is designed in such a manner that it activates and/or controls the wind-deflecting device (3) as a function of an illuminating function.

7. Motor vehicle according to Claim 1, **characterized in that** a drive for the wind-deflecting device (3) is integrated in the housing (4) of the illuminating device (1).

## Revendications

1. Véhicule automobile comprenant au moins un dispositif d'éclairage (1) disposé dans la région arrière et au moins un déflecteur aérodynamique activable (3) également disposé dans la région arrière,
**caractérisé en ce que**
l'au moins un déflecteur aérodynamique (3) fait partie du dispositif d'éclairage (1) du côté arrière, **en ce que** le déflecteur aérodynamique (3) peut être réglé entre au moins une position d'utilisation dans laquelle un élément déflecteur (5) est sorti ou déployé par pivotement, et une position de non utilisation dans laquelle l'élément déflecteur (5) est rétracté ou rentré par pivotement dans le dispositif d'éclairage (1) et **en ce que** le déflecteur aérodynamique (3) est intégré dans un boîtier (4) du dispositif d'éclairage (1).

2. Véhicule automobile selon la revendication 1,
**caractérisé en ce que**
le déflecteur aérodynamique (3) est disposé dans une région de bord supérieure du dispositif d'éclairage (1).

3. Véhicule automobile selon la revendication 1,
**caractérisé en ce que**
l'élément déflecteur (5) est monté dans ou sur le dispositif d'éclairage (1) soit
- de manière déplaçable en translation soit
- de manière à pouvoir tourner autour d'un axe (11') s'étendant essentiellement dans la direction transversale du véhicule, soit
- de manière à pouvoir pivoter autour d'un axe de pivotement virtuel (11) et disposé à distance du dispositif d'éclairage (1).

4. Véhicule automobile selon la revendication 1 ou 3,
**caractérisé en ce que**
l'élément déflecteur (5) reste dans sa position de non utilisation à l'intérieur d'un contour extérieur (8) du véhicule automobile.

5. Véhicule automobile selon l'une quelconque des revendications précédentes,
**caractérisé en ce**
**qu'**il est prévu un dispositif de commande qui est réalisé de telle sorte qu'il active et/ou commande le déflecteur aérodynamique (3) en fonction de paramètres dynamiques de conduite.

6. Véhicule automobile selon la revendication 5,
**caractérisé en ce que**
le dispositif de commande est réalisé de telle sorte qu'il active et/ou commande le déflecteur aérodynamique (3) en fonction d'une fonction d'éclairage.

7. Véhicule automobile selon la revendication 1,
**caractérisé en ce**
**qu'**un entraînement pour le déflecteur aérodynamique (3) est intégré dans le boîtier (4) du dispositif d'éclairage (1).
